Europäisches Patentamt

(19) European Patent Office

Office européen des brevets

(11) Numéro de publication : **0 076 748 B1**

# (12) FASCICULE DE BREVET EUROPÉEN

(45) Date de publication du fascicule du brevet :
20.02.85

(51) Int. Cl.⁴ : **G 21 C 3/32**

(21) Numéro de dépôt : **82401781.8**

(22) Date de dépôt : **30.09.82**

(54) **Assemblage combustible pour un réacteur nucléaire.**

(30) Priorité : **05.10.81 FR 8118670**

(43) Date de publication de la demande :
**13.04.83 Bulletin 83/15**

(45) Mention de la délivrance du brevet :
**20.02.85 Bulletin 85/08**

(84) Etats contractants désignés :
**BE CH DE FR GB IT LI SE**

(56) Documents cités :
**FR-A- 2 265 151**
**FR-A- 2 368 785**
**FR-A- 2 390 804**
**FR-A- 2 473 773**
**GB-A- 2 021 303**
**US-A- 3 915 793**
**US-A- 3 971 575**
**US-A- 4 030 975**

(73) Titulaire : **FRAMATOME ET CIE.**
**Tour Flat 1, Place de la Coupole**
**F-92400 Courbevoie (FR)**

(72) Inventeur : **Leclercq, Joseph**
**30 Route de Champagne**
**F-69370 Saint-Die (FR)**

(74) Mandataire : **Bouget, Lucien et al**
**CREUSOT-LOIRE 15 rue Pasquier**
**F-75383 Paris Cedex 08 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

L'invention concerne un assemblage combustible pour un réacteur nucléaire constitué par un faisceau de barreaux combustibles parallèles dont l'écartement est maintenu par des grilles entretoises transversales par rapport aux barreaux et des tubes de soutien se substituant à certains barreaux combustibles.

Les tubes de soutien ou tubes-guides, d'une longueur supérieure à la longueur des barreaux combustibles, assurent en coopération avec deux plaques d'extrémité transversales le maintien des grilles, la rigidité de l'assemblage, le guidage des barres de commande et la reprise des efforts axiaux.

Dans les parties des tubes guides comprises d'une part entre l'embout supérieur et la grille extrême supérieure et d'autre part entre l'embout inférieur et la grille extrême inférieure, les efforts axiaux transitent uniquement par les tubes-guides alors que, dans toute la zone courante de l'assemblage située entre les grilles extrêmes, l'effort axial transite aussi par les crayons.

De tels assemblages de grande longueur, à section carrée, constituent le cœur, dans les réacteurs nucléaires à eau sous pression par exemple.

Les plaques d'extrémité de tels assemblages sont généralement en acier inoxydable alors que les grilles entretoises disposées à intervalle régulier suivant la longueur de l'assemblage, sont généralement en un alliage de nickel, ou en alliage de zirconium.

Ces matériaux présentent en effet des propriétés mécaniques et physiques satisfaisantes pour la constitution de ces pièces de l'assemblage.

Dans les modes de réalisation connus, on prévoit de fixer tous les tubes-guides à chaque grille entretoise de façon à ce que chaque tube guide participe à la reprise des efforts axiaux.

Quand les tubes-guides et les grilles entretoises sont en acier inoxydable, on peut lier facilement par soudure électrique par exemple, les différentes pièces, à savoir les plaques d'extrémité, les grilles entretoises et les tubes-guides, constituant l'ossature de l'assemblage à l'intérieur duquel sont placés les barreaux combustibles.

Cependant, les matériaux tels que l'acier inoxydable ou les alliages de nickel sont des matériaux à forte capture neutronique, si bien que les performances des assemblages combustibles comportant une masse importante de ces matériaux en sont réduites d'autant.

On a donc proposé, par exemple dans le brevet français FR-A-2 049 108, d'utiliser des tubes guides en un matériau à faible capture neutronique, tel qu'un alliage de zirconium.

Cependant, les alliages de zirconium utilisés ne sont pas soudables à l'acier inoxydable et aux alliages de nickel constituant respectivement les plaques d'extrémité et les grilles de l'assemblage.

On propose donc dans le brevet français FR-A-2 049 108, d'utiliser des dispositifs de liaison intermédiaire soudés sur les plaques d'extrémité et sur les grilles et de réaliser une fixation mécanique entre les tubes-guides en alliage de zirconium (Zircaloy) et ces pièces de liaison intermédiaire. Ces pièces de liaison peuvent être par exemple des manchons en acier inoxydable à l'intérieur desquels sont introduits et sertis les tubes en alliage de zirconium, pour leur immobilisation.

Un tel assemblage comporte une masse de matériau à forte capture neutronique réduite par rapport aux assemblages connus antérieurement mais sa fabrication requiert des opérations nombreuses et complexes, puisqu'il faut souder dans chacune des cellules des grilles entretoises à l'intérieur desquelles passent des tubes-guides, des manchons en acier inoxydable, introduire les tubes-guides dans ces manchons, puis réaliser un sertissage du tube-guide dans le manchon, en introduisant un outillage à l'intérieur des tubes-guides.

D'autre part, sous irradiation, les tubes en alliage de zirconium grandissent et se dilatent moins que les pièces en acier généralement utilisées pour les pièces d'extrémité, si bien qu'il faut prévoir, lors de la conception de l'assemblage cette possibilité d'allongement différentiel de l'assemblage en service.

Le but de l'invention est donc de proposer un assemblage combustible pour un réacteur nucléaire constitué par un faisceau de barreaux combustibles parallèles dont l'écartement est maintenu par des grilles entretoises transversales par rapport aux barreaux et des tubes de soutien se substituant à certains barreaux combustibles, ces tubes de soutien, ou tubes-guides, d'une longueur supérieure aux barreaux combustibles assurant avec deux plaques d'extrémité transversales, le maintien des grilles, la rigidité de l'assemblage, la reprise des efforts axiaux ainsi que le guidage des barres de commande du réacteur, les plaques d'extrémité étant en un matériau à forte capture neutronique, tel que l'acier inoxydable, cet assemblage combustible étant d'une structure permettant une fabrication plus facile et moins coûteuse, et assurant une bonne tenue vis-à-vis des efforts axiaux.

Dans ce but, l'assemblage combustible suivant l'invention comporte au moins deux tubes-guides en matériau métallurgiquement compatible avec celui des grilles entretoises fixés rigidement aux plaques et aux grilles entretoises pour assurer la liaison des différentes parties constituant l'assemblage, les liaisons entre ces tubes-guides, les entretoises extrêmes et les plaques d'extrémité permettant, dans les zones comprises entre les plaques d'extrémité et les grilles extrêmes, la reprise des efforts axiaux uniquement par ces tubes-guides et les autres tubes-guides, en matériau à faible capture neutronique, étant solidarisés uniquement à l'une des plaques d'extrémité montés coulissants dans l'autre plaque d'extrémité et simplement engagés dans les cellules des grilles entretoises de façon à pouvoir se déplacer par rapport à celles-ci, sous l'effet de la dilatation.

Selon un premier mode de réalisation de l'invention, les grilles entretoises sont en un même matériau à forte capture neutronique que les plaques d'extrémité, par exemple en acier inoxydable, ainsi que les deux tubes-guides fixés à ces grilles.

Selon un second mode de réalisation de l'invention les grilles entretoises sont en matériau à faible capture neutronique, par exemple en Zircaloy, ainsi que les deux tubes-guides fixés à ces grilles, et ces deux tubes-guides sont fixés aux plaques d'extrémité par des liaisons mécaniques, par exemple par vissage.

Ainsi, si tous les tubes-guides servent au guidage des barres de commande, seuls certains d'entré eux assurent la rigidité de l'assemblage et la reprise des efforts axiaux.

Afin de bien faire comprendre l'invention, on va maintenant décrire à titre d'exemples non limitatifs, en se référant aux figures jointes en annexe, plusieurs modes de réalisation d'un assemblage combustible pour réacteur nucléaire à eau sous pression selon l'invention.

La figure 1 est une vue générale en élévation d'un assemblage combustible pour réacteur nucléaire à eau sous pression.

La figure 2 est une vue en coupe suivant A A de la figure 1.

La figure 3 est une vue en coupe par un plan vertical de la partie supérieure de deux tubes-guides et de la liaison de ces tubes avec la plaque d'extrémité supérieure et avec des grilles entretoises, d'un assemblage suivant un premier mode de réalisation de l'invention.

La figure 4 est une vue en coupe par un plan vertical de deux tubes de soutien et de la liaison de ces tubes avec les plaques d'extrémité et avec les grilles entretoises, dans un assemblage selon une première variante de ce premier mode de réalisation.

La figure 5 est une vue en coupe suivant B B de la figure 4.

La figure 6 est une vue en coupe par un plan vertical de deux tubes-guides et de leurs liaisons avec les plaques d'extrémité et les grilles entretoises, dans un assemblage selon une seconde variante du premier mode de réalisation.

La figure 7 est une vue en coupe par un plan vertical de la partie supérieure du tube guide, dans le cas d'un assemblage démontable selon le premier mode de réalisation de l'invention.

La figure 8 est une vue en coupe par un plan vertical de l'extrémité supérieure du tube-guide, d'un assemblage démontable, selon une seconde variante.

La figure 9 est une vue en coupe par un plan vertical de l'extrémité supérieure du tube guide, dans le cas d'un assemblage démontable, selon une troisième variante.

La figure 10 est une vue en coupe par un plan vertical de l'extrémité supérieure d'un tube-guide, dans le cas d'un assemblage démontable, selon une quatrième variante.

La figure 11 est une vue partielle en coupe par un plan vertical d'un assemblage selon un second mode de réalisation de l'invention.

La figure 12 est une vue partielle en coupe de la partie supérieure de l'assemblage selon une variante du second mode de réalisation.

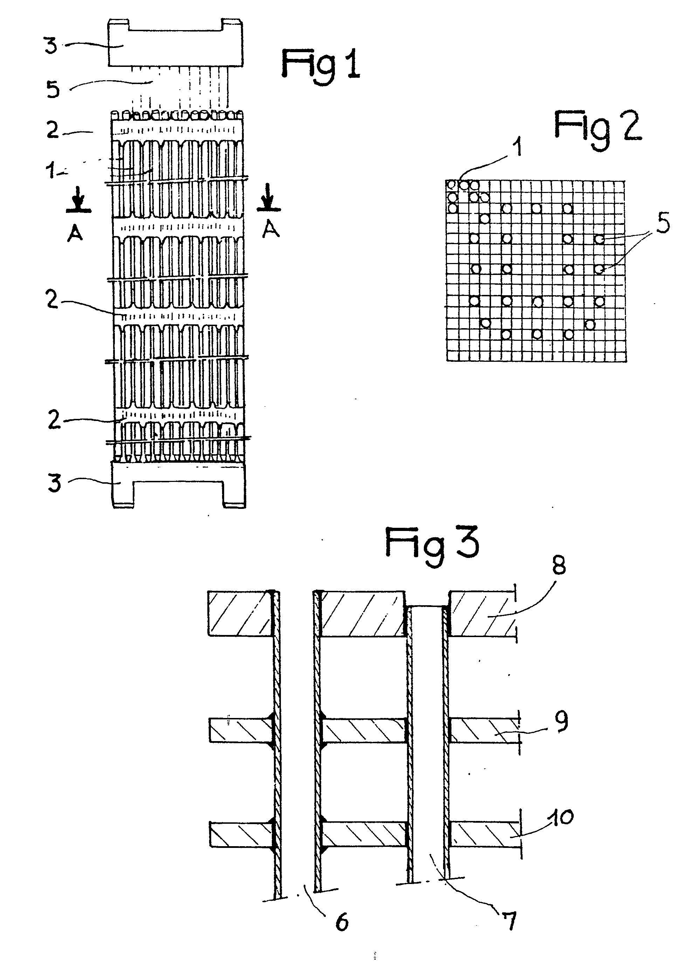

Sur la figure 1, on voit un assemblage combustible constitué par un faisceau de barreaux combustibles 1 parallèles dont l'écartement est maintenu grâce à des grilles entretoises 2 régulièrement espacées suivant la longueur de l'assemblage combustible et constituant, ainsi qu'il est visible sur la figure 2, un réseau à mailles carrées où certains des emplacements des barreaux combustibles 1 sont occupés par des tubes-guides 5.

Les tubes-guides 5 sont d'une longueur supérieure à la longueur des barreaux 1, de telle sorte que ces tubes-guides puissent être fixés sur les plaques d'extrémité 3 pour assurer la rigidité de l'assemblage.

Les tubes 5 servent à la fois à maintenir la rigidité de l'assemblage et à guider les barreaux absorbants constituant la barre de commande associée à l'assemblage.

Sur la figure 3, on voit l'extrémité de deux tubes guides 6 et 7 d'un assemblage combustible dont la plaque d'extrémité supérieure, ou embout supérieur est en acier inoxydable et les grilles entretoises 9 et 10 sont en alliage de nickel à haute élasticité.

Le tube-guide 6 est un tube en acier inoxydable et sa liaison aux grilles entretoises 9 et 10 et à l'embout supérieur 8 est réalisée par soudure directe sur ces pièces.

Le tube 7 est en alliage de zirconium appelé « Zircaloy » à faible capture neutronique.

Ce tube 7 est simplement engagé dans les entretoises 9 et 10 et dans l'embout supérieur 8, à l'intérieur d'ouvertures permettant le déplacement longitudinal du tube 7 par rapport à ces grilles entretoises et à cet embout supérieur, lorsque le tube 7 subit un allongement sous l'effet de l'irradiation et de la température dans le réacteur.

L'ensemble de l'assemblage comporte quatre tubes-guides en acier inoxydable tels que le tube 6 et 20 tubes en alliage de zirconium tels que le tube 7.

Les tubes 7 sont fixés à leur partie inférieure sur l'embout inférieur de l'assemblage, par une liaison mécanique.

On voit donc que dans un assemblage tel que décrit en se référant à la figure 3, la masse de matériau à forte capture neutronique est donc réduite, par le fait que vingt tubes-guides sur vingt-quatre sont en alliage de zirconium à faible capture neutronique.

D'autre part, la construction de l'assemblage est très facile, puisque les quatre tubes en acier inoxydable peuvent être soudés directement sur les embouts d'extrémité et sur les plaques entretoises, sans nécessiter de pièces intermédiaires.

D'autre part, le coulissement libre des tubes de zirconium dans les ouvertures ménagées dans l'embout supérieur et dans les grilles entretoises, permet d'absorber la dilatation des tubes de zirconium sous irradiation, sans qu'il y ait allongement de l'assemblage.

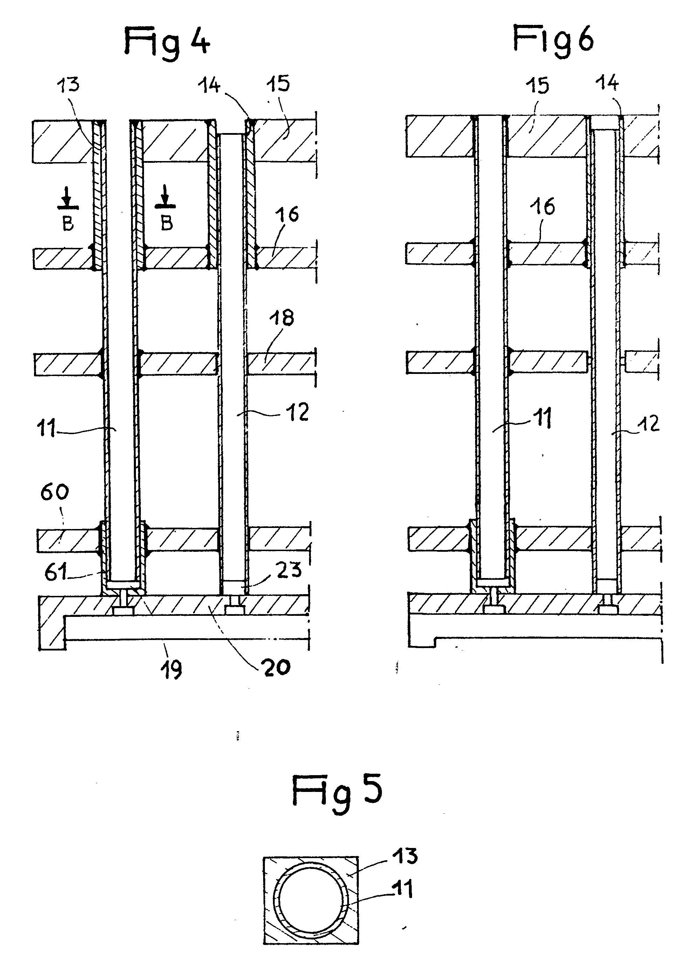

Sur la figure 4 on voit deux tubes guides 11 et 12 engagés à leur partie supérieure dans des manchons 13 et 14 fixés par soudage d'une part sur l'embout supérieur 15 et d'autre part sur la grille entretoise supérieure de l'assemblage 16. Ces embouts en acier inoxydable permettent la liaison de la grille entretoise supérieure et de l'embout supérieur et augmentent ainsi la rigidité et la tenue de l'assemblage vis-à-vis des efforts axiaux.

Le tube 11 en acier inoxydable est soudé à sa partie supérieure sur l'embout 13 et à chacune des grilles entretoises telles que 18 disposées à intervalle régulier suivant la hauteur de l'assemblage.

Le tube-guide 12 en alliage de zirconium à faible capture neutronique est simplement engagé dans des ouvertures des grilles entretoises telles que 16 et 18 et dans l'embout supérieur 15.

Le tube 11 porte à son extrémité inférieure un bouchon 19 en acier inoxydable qui permet sa fixation par vis sur la plaque d'extrémité inférieure 20.

La grille extrême inférieure 60 est liée à l'embout inférieur 20 par un manchon 61 auquel elle est soudée. Le tube-guide 11 est inséré dans ce manchon. Le manchon est immobilisé sur la plaque d'extrémité lors de la fixation du tube.

La fixation de la partie inférieure du tube 12 en alliage de zirconium sur la plaque inférieure 20 est réalisée grâce à un bouchon en alliage de zirconium 23 fermant l'extrémité inférieure du tube 12 et permettant une fixation par vis du tube 12 sur l'embout inférieur 20.

Pour l'ensemble de l'assemblage, on utilise quatre tubes en acier inoxydable analogues au tube 11 et fixés de la même façon sur les embouts d'extrémité et sur les grilles entretoises.

Les vingt autres tubes utilisés sont des tubes en alliage de zirconium tels que le tube 12, fixés uniquement sur l'embout inférieur 20.

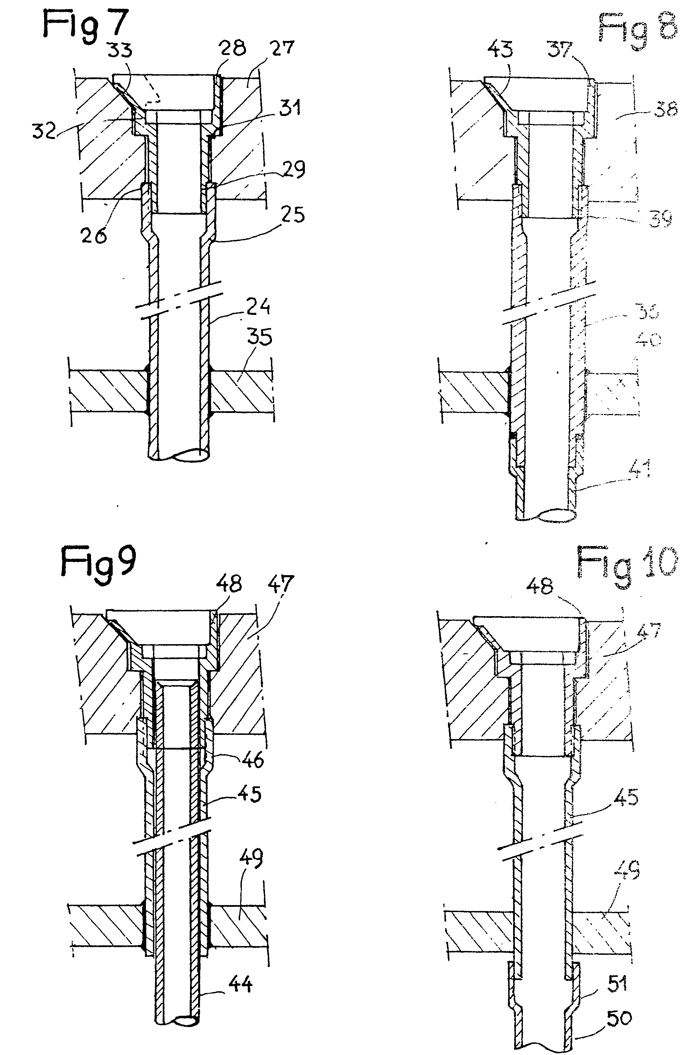

Sur la figure 5 on voit que l'embout en acier inoxydable 13 est de section carrée ce qui permet d'avoir un engagement parfait de cet embout dans la grille 16 et une fixation extrêmement résistante de l'embout sur la grille 16 et la plaque d'extrémité supérieure 15, sans pour autant gêner les crayons combustibles.

De la même façon, les embouts 14 ont une section carrée permettant l'engagement parfait dans les cellules de la grille 16.

Sur la figure 6, on voit un mode de réalisation des liaisons entre les tubes-guides en acier inoxydable et l'embout par soudage direct de ces tubes sur l'embout supérieur 15 et sur la grille entretoise supérieure 16, sans utilisation d'un manchon 13.

Les tubes 12 en Zircaloy sont en revanche engagés dans des manchons 14 identiques à ceux décrits en se référant à la figure 4, assurant la liaison entre la plaque et l'extrémité supérieure et la grille entretoise supérieure.

Ce mode de réalisation de l'assemblage permet de diminuer la masse d'acier inoxydable et donc l'absorption de neutrons par les structures de cet assemblage.

Sur la figure 7, on voit la partie supérieure d'un tube-guide 24 en acier inoxydable, assurant la rigidité de l'assemblage, dans le cas d'un assemblage combustible aisément démontable, tel que décrit dans le brevet de la société FRAMATOME FR-A-2 368 785.

Dans un tel assemblage, l'extrémité supérieure des tubes-guides comporte une partie évasée de forme prismatique 25 qui peut être introduite dans un logement 26 ménagé dans la partie inférieure de l'embout supérieur 27, pour la fixation du tube sur cet embout, grâce à une douille 28 creuse et comportant une partie filetée 29 qui se visse dans une partie taraudée correspondante ménagée sur la surface intérieure de la partie 25 du tube-guide.

La douille 28 est engagée dans une ouverture traversant la plaque 27 et comportant un épaulement 31 et une partie supérieure 32 de plus grand diamètre que la partie inférieure dans laquelle sont ménagés des logements 33, pour le blocage en rotation de la douille par expansion de la virole constituant la partie supérieure.

De cette façon, le tube est parfaitement bloqué en rotation et fixé rigidement sur l'embout supérieur 27.

Dans le cas d'un tel assemblage démontable, il suffit de prévoir quatre tubes 24 en acier inoxydable tels que représentés sur la figure 7, soudés aux grilles entretoises telles que 35, pour réaliser un assemblage rigide des tubes-guides, des grilles entretoises et des embouts, tout en maintenant une possibilité de démonter l'embout supérieur par dévissage d'une douille 28.

Pour un assemblage à vingt-quatre tubes-guides, les vingt autres tubes-guides sont en alliage de zirconium et sont fixés uniquement à l'embout inférieur de l'assemblage par bouchon et par vis comme décrit en se référant à la figure 4.

Les tubes en alliage de zirconium sont d'autre part, introduits dans des ouvertures des grilles entretoises et de l'embout supérieur, permettant leur déplacement, en cas de dilatation de ces tubes.

Lorsque la plaque d'extrémité supérieure 27 est démontée, il est possible d'accéder aux crayons combustibles et d'extraire ceux-ci sélectivement de l'assemblage, pour leur remplacement ou pour leur examen.

Dans tous les cas, il est préférable de prévoir des tubes-guides en Zircaloy, d'une longueur suffisante pour que ces tubes débouchent le plus près possible de la face supérieure de l'embout supérieur de l'assemblage. Ces tubes sont ainsi maintenus et guidés de façon plus efficace.

Sur la figure 8, on voit une variante de réalisation de la fixation d'un tube-guide en acier inoxydable, dans le cas d'un assemblage facilement démontable.

On effectue la fixation d'un embout cylindrique 36 comportant une extrémité supérieure 39 de forme prismatique engagée dans une ouverture de forme correspondante ménagée dans l'embout supérieur 38.

Une douille 37 peut venir se fixer comme précédemment à l'intérieur de l'embout 36 pour la fixation de la plaque supérieure 38 par rapport à cet embout 36.

L'embout 36 est d'autre part fixé par soudage aux grilles entretoises telles que 40 et le tube-guide en acier inoxydable 41 est fixé par soudure à l'extrémité de l'embout 36, immédiatement en dessous de la première grille entretoise 40.

Dans ce mode de réalisation, la liaison entre la plaque supérieure et la première grille entretoise 40 est donc renforcée par le fait qu'elle est réalisée grâce à des embouts 36 de plus fort diamètre que les tubes-guides 41, qui de même que sur la figure 4, peuvent avoir une section carrée.

De la même façon que pour le dispositif décrit en se référant à la figure 7, la virole constituant la partie supérieure de la douille 37 peut être déformée de façon à venir par expansion dans les logements 43 et à bloquer la douille en rotation.

Sur la figure 9, on voit une variante de montage pour les tubes-guides en alliage de zirconium 44 ou ceux-ci sont guidés et maintenus à leur partie supérieure par un manchon 45 fixé à la plaque supérieure de l'assemblage 47 par l'intermédiaire d'une douille 48 qui sert également au maintien et au guidage de la partie supérieure du tube 44.

Le manchon 45 comporte une partie supérieure 46 dont la surface externe est de forme prismatique pour son engagement dans une ouverture de forme correspondante de la plaque 47. Le manchon 45 est également relié par soudure à la grille entretoise supérieure 49 et réalise ainsi la liaison entre la plaque d'extrémité supérieure 47 et cette grille entretoise 49.

Les tubes 44 sont reliés à leur partie inférieure à la plaque d'extrémité inférieure de l'assemblage et sont engagés dans des ouvertures des différentes grilles de l'assemblage de façon à ce que leur guidage soit assuré, tout en maintenant des possibilités de déplacement des tubes de zirconium par rapport à ces grilles entretoises, dans la direction longitudinale.

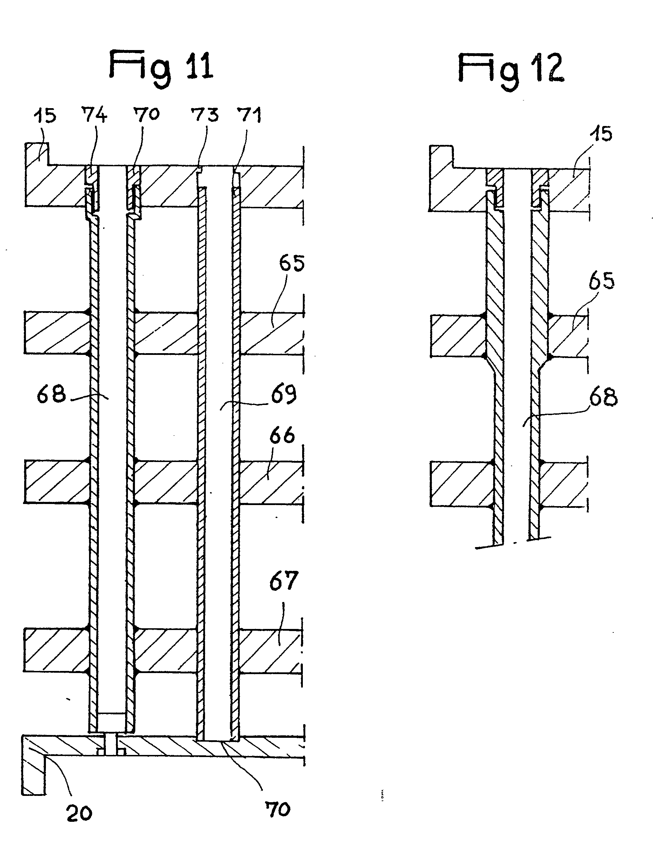

Sur la figure 10, on voit une variante de montage des tubes-guides en alliage de zirconium 50 où ceux-ci comportent à leur partie supérieure un épanouissement 51 dans lequel vient s'engager la partie inférieure du manchon 45 fixée sur la plaque d'extrémité supérieure 47 grâce à une douille 48 comme décrite en se référant à la figure 9.

Ce type de montage des tubes-guides en alliage de zirconium permet, pour un même diamètre intérieur des tubes-guides, et un même diamètre extérieur des manchons 45, d'utiliser des manchons ayant une plus forte épaisseur, puisque leur diamètre intérieur peut être rendu plus faible, puisqu'il ne sert plus au passage des tubes-guides.

Sur la figure 11, on a représenté un assemblage combustible selon un deuxième mode de réalisation de l'invention. Les grilles entretoises 65, 66, 67 sont en alliage de zirconium (Zircaloy). Les tubes-guides sont aussi du même alliage. La liaison du tube guide 68 à l'embout supérieur 15 se fait d'une manière similaire à celle représentée figure 7, c'est-à-dire en utilisant une douille 74 creuse se vissant dans une partie taraudée correspondante pratiquée à l'intérieur du tube-guide.

Bien que l'on ne l'ait pas explicitement représenté, la liaison des tubes-guides 68 à l'embout peut se faire selon tous les modes de réalisation représentés aux figures 7, 8, 9, 10 pourvu que l'on prenne la précaution d'utiliser des matériaux permettant de réaliser les liaisons soudées nécessaires.

Les tubes-guides 69 montés libres sont aussi en Zircaloy et sont introduits dans un alésage borgne 70 de la plaque d'extrémité inférieure 20 et dans un alésage 71 de la plaque supérieure. Cet alésage 71 comporte à son extrémité supérieure une saillie circulaire 73 destinée à immobiliser le tube-guide.

On a représenté sur la figure 12 un mode de réalisation de la liaison entre la grille 65 et l'embout 15 selon lequel, dans cette partie, le tube-guide 68 est renforcé et présente une section extérieure supérieure à sa section normale, sur une hauteur comprise entre son extrémité supérieure et le niveau inférieur de la grille extrême 65. Cette section peut être circulaire ou carrée, d'une manière identique à ce qui a été représenté sur la figure 5.

Les tubes-guides présentent les mêmes renforts dans leur partie inférieure, entre la grille extrême et l'embout inférieur.

On voit que le dispositif suivant l'invention permet de simplifier la structure et la fabrication de l'assemblage, de diminuer la déformation longitudinale de celui-ci sous irradiation en particulier dans le mode de réalisation selon lequel les grilles entretoises sont en acier inoxydable et d'obtenir une structure très résistante, malgré l'utilisation d'une masse peu importante de matériau à forte capture neutronique. En outre, le fait de n'avoir qu'un nombre réduit de liaisons entre les tubes-guides et les grilles permet d'améliorer les conditions thermohydrauliques puisque les cellules adjacentes aux crayons montés libres dans la grille sont très bien irriguées.

L'invention ne se limite pas aux modes de réalisation qui ont été décrits; elle en comporte au contraire toutes les variantes.

C'est ainsi qu'on peut imaginer d'autres modes de liaison, soit démontables, soit non démontables entre les tubes-guides et les plaques d'extrémité et d'autres modes de liaison entre les extrémités inférieures de ces tubes-guides et la plaque d'extrémité inférieure.

On peut imaginer également l'utilisation de matériaux différents de l'acier inoxydable pour la constitution des tubes-guides assurant la rigidité de l'assemblage et d'autres matériaux que les alliages de zirconium pour les autres tubes-guides qui ne sont fixés qu'à la plaque inférieure de l'assemblage.

Enfin l'assemblage combustible suivant l'invention peut être utilisé dans tous les réacteurs nucléaires où le combustible est sous forme de barreaux de grande longueur constituant des faisceaux de barreaux parallèles reliés entre eux par des grilles entretoises et des plaques d'extrémité.

**Revendications**

1. Assemblage combustible pour un réacteur nucléaire constitué par un faisceau de barreaux combustibles (1) parallèles dont l'écartement est maintenu par des grilles-entretoises (2) transversales par rapport aux barreaux, deux plaques d'extrémités transversales (3) et des tubes-guides (5) de soutien se substituant à certains barreaux combustibles, d'une longueur supérieure à ces barreaux combustibles, fixés rigidement aux plaques d'extrémité et aux grilles-entretoises et assurant le maintien des grilles-entretoises, la rigidité de l'assemblage et la reprise des efforts axiaux ainsi que le guidage des barres de commande du réacteur, les plaques d'extrémité (3) étant en un matériau à forte capture neutronique tel que l'acier inoxydable, caractérisé par le fait qu'il comporte à la fois au moins deux tubes-guides de soutien (6, 68) en un matériau métallurgiquement compatible avec le matériau des grilles entretoises (9, 10, 65, 66, 67) et d'autres tubes-guides (7, 69) constituant la majeure partie des tubes-guides de l'assemblage, en un matériau à faible capture neutronique solidarisés uniquement à l'une des plaques d'extrémité (8, 20) et simplement engagés dans les cellules des grilles entretoises de façon à pouvoir se déplacer par rapport à celles-ci, sous l'effet de la dilatation et assurant uniquement le guidage de barres de commande.

2. Assemblage combustible suivant la revendication 1, dans le cas où les grilles-entretoises (9, 10) sont en matériau à forte capture neutronique, caractérisé par le fait que les tubes-guides de soutien (6) en matériau à forte capture neutronique sont soudés sur les grilles-entretoises (9, 10).

3. Assemblage combustible suivant la revendication 2, caractérisé par le fait que les tubes-guides de soutien (6) en matériau à forte capture neutronique sont directement soudés sur les plaques d'extrémité (8).

4. Assemblage combustible selon la revendication 2, caractérisé par le fait que les tubes-guides de soutien (11) en matériau à forte capture neutronique sont soudés à la plaque d'extrémité supérieure (15) de l'assemblage par l'intermédiaire de manchons (13) assurant la jonction entre la plaque d'extrémité supérieure (15) et la grille entretoise supérieure (16) de l'assemblage auquel ces manchons (13) sont soudés.

5. Assemblage combustible selon l'une quelconque des revendications 2 et 3, caractérisé par le fait que les tubes-guides (12) en matériau à faible capture neutronique sont engagés à leur partie supérieure dans des manchons (14) assurant la jonction entre la plaque d'extrémité supérieure (15) et la grille entretoise supérieure (16) de l'assemblage.

6. Assemblage combustible selon la revendication 2, caractérisé par le fait que les tubes-guides de soutien (24) en matériau à forte capture neutronique sont fixés rigidement à la plaque d'extrémité supérieure (27) de l'assemblage par l'intermédiaire d'une liaison démontable comportant une douille (28) vissée à l'intérieur de l'extrémité supérieure (25) du tube-guide (24).

7. Assemblage combustible selon la revendication 2, caractérisé par le fait que les tubes-guides de soutien (41) en matériau à forte capture neutronique sont liés par soudage à leur partie supérieure, à la partie inférieure de manchons (36) soudés sur la grille entretoise supérieure (40) de l'assemblage et reliés à la plaque d'extrémité supérieure (38) de celui-ci par l'intermédiaire d'une liaison démontable comportant une douille (37) vissée dans la partie supérieure du manchon (36).

8. Assemblage combustible selon la revendication 2, caractérisé par le fait que les tubes-guides (44) en matériau à faible capture neutronique sont engagés librement à leur partie supérieure dans des manchons (45) soudés sur la grille entretoise supérieure (49) et reliés à la plaque d'extrémité supérieure (47) par l'intermédiaire d'une liaison démontable comportant une douille (48) vissée dans la partie supérieure du manchon (45).

9. Assemblage combustible selon la revendication 1, caractérisé par le fait que les tubes-guides (50) en matériau à faible capture neutronique sont engagés librement sur la partie inférieure de manchons (45) soudés à la grille entretoise supérieure (49) et reliés à la plaque d'extrémité supérieure (47) par l'intermédiaire d'une liaison démontable comportant une douille (48) vissée dans la partie supérieure du manchon (45).

10. Assemblage combustible selon l'une quelconque des revendications 2 à 8, comportant vingt-quatre tubes-guides, caractérisé par le fait qu'il comporte quatre tubes-guides de soutien (6, 11) en matériau à forte capture neutronique et vingt tubes-guides (7, 12) en matériau à faible capture neutronique.

11. Assemblage combustible suivant la revendication 1, dans le cas où les grilles (65, 66, 67) sont en matériau à faible capture neutronique, caractérisé par le fait que les tubes-guides de soutien (68) en matériau à faible capture neutronique sont soudés sur les grilles-entretoises (65, 66, 67) et fixés mécaniquement sur les plaques d'extrémité (15, 20).

12. Assemblage combustible selon la revendication 11, caractérisé par le fait que les grilles-entretoises (65, 66, 67) sont en alliage de zirconium et qu'au moins deux tubes-guides de soutien (68) en alliage de zirconium sont fixés aux plaques d'extrémité en acier inoxydable par des liaisons mécaniques.

13. Assemblage combustible selon la revendication 12, caractérisé par le fait que les liaisons mécaniques sont des liaisons démontables comportant une douille (74) fixée à l'intérieur de l'extrémité supérieure du tube-guide (68).

14. Assemblage combustible selon la revendication 12, caractérisé par le fait que les tubes-guides (68) fixés aux plaques d'extrémités (15) comportent des parties renforcées entre les plaques d'extrémité (15) et les grilles extrêmes (65).

## Claims

1. Fuel assembly for a nuclear reactor consisting of a cluster of parallel fuel rods (1) the spacing of which is maintained by spacer-grids (2) which are transverse relative to the rods, two transverse end plates (3) and supporting guide-tubes (5) being substituted for some fuel rods, of a length greater than these fuel rods, fixed rigidly to the end plates and to the spacer-grids and ensuring the support of the spacer-grids, the rigidity of the assembly and the absorption of the axial stresses and the guidance of the reactor control rods, the end plates (3) being made of a material with a high neutron capture, such as stainless steel, characterised in that it simultaneously comprises at least two supporting guide-tubes (6, 68) made of a material which is metallurgically compatible with the material of the spacer-grids (9, 10, 65, 66, 67) and other guide-tubes (7, 69) forming the majority of the guide-tubes of the assembly, made of a material with low neutron capture which are combined together only at one of the end plates (8, 20) and are merely engaged in the cells of the spacer-grids so as to be capable of moving relative to these cells, under the effect of the expansion, and only providing the guidance of the control rods.

2. Fuel assembly according to Claim 1, in the case where the spacer-grids (9, 10) are made of a material with high neutron capture, characterised in that the supporting guide-tubes (6) made of a material with high neutron capture are welded to the spacer-grids (9, 10).

3. Fuel assembly according to Claim 2, characterised in that the supporting guide-tubes (6) made of a material with a high neutron capture are welded directly to the end plates (8).

4. Fuel assembly according to Claim 2, characterised in that the supporting guide-tubes (11) made of a material with high neutron capture are welded to the upper end plate (15) of the assembly through the intermediacy of sleeves (13) providing the connection between the upper end plate (15) and the upper spacer-grid (16) of the assembly to which these sleeves (13) are welded.

5. Fuel assembly according to either of Claims 2 and 3, characterised in that the guide-tubes (12) made of a material with low neutron capture are engaged with their upper part in sleeves (14) providing the connection between the upper end plate (15) and the upper spacer-grid (16) of the assembly.

6. Fuel assembly according to Claim 2, characterised in that the supporting guide-tubes (24) made of a material with high neutron capture are rigidly fixed to the upper end plate (27) of the assembly through the intermediacy of a demountable connection incorporating a socket (28) screwed inside the upper end (25) of the guide-tube (24).

7. Fuel assembly according to Claim 2, characterised in that the supporting guide-tubes (41) made of a material with high neutron capture are joined by welding at their upper part to the lower part of the sleeves (36) welded to the upper spacer-grid (40) of the assembly and connected to the upper end plate (38) of the latter through the intermediacy of a demountable connection incorporating a socket (37) screwed into the upper part of the sleeve (36).

8. Fuel assembly according to Claim 2, characterised in that the guide-tubes (44) made of a material with low neutron capture are freely engaged by their upper part in sleeves (45) welded to the upper spacer-grid (49) and connected to the upper end plate (47) through the intermediacy of a demountable connection incorporating a socket (48) screwed into the upper part of the sleeve (45).

9. Fuel assembly according to Claim 1, characterised in that the guide-tubes (50) made of a material with low neutron capture are freely engaged in the lower part of sleeves (45) welded to the upper spacer-grid (49) and connected to the upper end plate (47) through the intermediacy of a demountable connection incorporating a socket (48) screwed into the upper part of the sleeve (45).

10. Fuel assembly according to any one of Claims 2 to 8, incorporating twenty-four guide-tubes, characterised in that it incorporates four supporting guide-tubes (6, 11) made of a material with high neutron capture and twenty guide-tubes (7, 12) made of a material with low neutron capture.

11. Fuel assembly according to Claim, in the case where the grids (65, 66, 67) are made of a material with low neutron capture, characterised in that the supporting guide-tubes (68) made of a material with low neutron capture are welded to the spacer-grids (65, 66, 67) and fixed to the end plates (15, 20) by mechanical means.

12. Fuel assembly according to Claim 11, characterised in that the spacer-grids (65, 66, 67) are made of a zirconium alloy and that at least two supporting guide-tubes (68) made of a zirconium alloy are fixed by mechanical connections to the stainless-steel end plates.

13. Fuel assembly according to Claim 12, characterised in that the mechanical connections are demountable connections incorporating a socket (74) fixed inside the upper end of the guide-tube (68).

14. Fuel assembly according to Claim 12, characterised in that the guide-tubes (68) fixed to the end plates (15) incorporate strengthened portions between the end plates (15) and the outermost grids (65).

**Ansprüche**

1. Brennstoffkassette für einen Kernreaktor bestehend aus einem Bündel paralleler Brennstoffstäben (1) — der Abstand ist durch Distanzgitter (2) quer zu den Brennstoffstäben gewährleistet — aus zwei querliegenden Endplatten (3) sowie aus starr an die Endplatten und an die Distanzgitter befestigte Stütz- und Führungsrohre (5) mit einer grösseren Länge als die Brennstoffstäbe, die an die Stelle dieser Brennstoffstäbe treten und das Halten der Distanzgitter, die Starrheit der Brennstoffkassette und die Aufnahme der Querkräfte sowie die Führung der Reaktorsteuerstäbe gewährleisten, wobei die Endplatten (3) aus einem starken Neutroneneinfangsmaterial wie Nirostahl bestehen, dadurch gekennzeichnet, dass sie auf einmal mindestens zwei Stütz- und Führungsrohre (6, 68) aus einem mit dem Material der Distanzgitter (9, 10, 65, 66, 67) metallurgisch verträglichen Material umfasst sowie weitere Führungsrohre (7, 69) aus einem schwachen Neutroneneinfangsmaterial, die den grössten Teil der Führungsrohre der Kassette bilden und nur an einer dieser Endplatten (8, 20) befestigt und einfach in die Öffnungen der Distanzgitter eingeführt sind um somit unter der Dehnungswirkung zu disen bewegbar zu sein und nur die Führung der Steuerstäbe zu gewährleisten.

2. Brennstoffkassette nach Anspruch 1, bei welcher die Distanzgitter (9, 10) aus einem starken Neutroneneinfangsmaterial bestehen, dadurch gekennzeichnet, dass die Stütz- und Führungsrohre (6) aus starkem Neutroneneinfangsmaterial an die Distanzgitter (9, 10) angeschweisst sind.

3. Brennstoffkassette nach Anspruch 2, dadurch gekennzeichnet, dass die Stütz- und Führungsrohre (6) aus starkem Neutroneneinfangsmaterial direkt an die Endplatten (8) angeschweisst sind.

4. Brennstoffkassette nach Anspruch 2, dadurch gekennzeichnet, dass die Stütz- und Führungsrohre (11) aus starkem Neutroneneinfangsmaterial an die obere Endplatte (15) der Kassette mittels Muffen (13) angeschweisst sind, welche die Verbindung zwischen der oberen Endplatte (15) und dem oberen Distanzgitter (16) der an diese Muffen (13) angeschweisste Kassette gewährleisten.

5. Brennstoffkassette nach einem der Ansprüche 2 und 3, dadurch gekennzeichnet, dass die Führungsrohre (12) aus schwachem Neutroneneinfangsmaterial mit ihrem Oberteil in die Muffen (14) eingeführt sind, welche die Verbindung zwischen der oberen Endplatte (15) und dem oberen Distanzgitter (16) der Kassette gewährleisten.

6. Brennstoffkassette nach Anspruch 2, dadurch gekennzeichnet, dass die Stütz- und Führungsrohre (24) aus starkem Neutroneneinfangsmaterial an der oberen Endplatte (27) der Kassette durch eine abnehmbare verbindung starr befestigt sind, die aus einer innen in das obere Ende (25) des Führungsrohres (24) eingeschraubte Hülse (28) besteht.

7. Brennstoffkassette nach Anspruch 2, dadurch gekennzeichnet, dass die Stütz- und Führungsrohre (41) aus starkem Neutroneneinfangsmaterial mit ihrem Oberteil mittels Verbindungsscheissung an dem Unterteil von Muffen (36) befestigt sind, die an das Distanzgitter (40) der Kassette angeschweisst und an der oberen Endplatte (38) derselben mittels einer abnehmbaren Verbindung befestigt sind, die aus einer in das Oberteil der Muffe (36) eingeschreubte Hülse (37) besteht.

8. Brennstoffkassette nach Anspruch 2, dadurch gekennzeichnet, dass die Führungsrohre (44) aus schwachem Neutroneneinfangsmaterial mit ihrem Oberteil in Muffen (45) frei beweglich eingeführt sind, die an das obere Distanzgitter (49) angeschweisst und an der oberen Endplatte (47) mittels einer abnehmbaren verbindungen befestigt sind, die aus einer in das Oberteil der Muffe (45) eingeschraubten Hülse besteht.

9. Brennstoffkassette nach Anspruch 1, dadurch gekennzeichnet, dass die Führungsrohre (50) aus schwachem Neutroneneinfangsmaterial an dem Oberteil von Muffen (45) frei beweglich eingeführt sind, die an das obere Distanzgitter (49) angeschweisst und an der oberen Endplatte (47) über eine abnehmbare Verbindung befestigt sind, die aus einer in das Oberteil der Muffe (45) eingeschraubten Hülse besteht.

10. Brennstoffkassette nach einem der Ansprüche 2 bis 8, mit vierundzwanzig Führungsrohre, dadurch gekennzeichnet, dass sie vier Stütz- und Führungsrohre (6, 11) aus starkem Neutroneneinfangsmaterial und zwanzig Führungsrohre (7, 12) aus schwachem Neutroneneinfangsmaterial umfasst.

11. Brennstoffkassette nach Anspruch 1, bei welcher die Gitter (65, 66, 67) aus einem schwachen Neutroneneinfangsmaterial bestehen, dadurch gekennzeichnet, dass die Stütz- und Führungsrohre (68) aus schwachem Neutroneneinfangsmaterial an die Distanzgitter (65, 66, 67) angeschweisst und an den Endplatten (15, 20) mechanisch befestigt sind.

12. Brennstoffkassette nach Anspruch 11, dadurch gekennzeichnet, dass die Distanzgitter (65, 66, 67) aus einer Zirkonlegierung bestehen, und dass mindestens zwei Stütz- und Führungsrohre (68) aus Zirkonlegierung an den Endplatten aus Nirostahl über mechanische Verbindungen befestigt sind.

13. Brennstoffkassette nach Anspruch 12, dadurch gekennzeichnet, dass die mechanischen Verbindungen abnehmbare Verbindungen sind, die eine innen in das obere Ende des Führungsrohres (68) befestigte Hülse (74) umfassen.

14. Brennstoffkassette nach Anspruch 12, dadurch gekennzeichnet, dass die an den Endplatten (15) befestigte Führungsrohre (68) verstärkte Teile zwischen den Endplatten (15) und den äusseren Distanzgitter (65) aufweisen.

**Fig 1**

**Fig 2**

**Fig 3**

# Fig 4

# Fig 6

# Fig 5

# Fig 7

33 28 27
32 31
26 29
25
24
35

# Fig 8

43 37
38
39
36
40
41

# Fig 9

48 47
46
45
49
44

# Fig 10

48
47
45
49
51
50

3

# Fig 11

# Fig 12